# EUROPÄISCHE PATENTSCHRIFT

(11) **EP 2 434 204 B1**
(45) Veröffentlichungstag und Bekanntmachung des Hinweises auf die Patenterteilung: **03.08.2016**
(21) Anmeldenummer: 11007456.4
(22) Anmeldetag: 14.09.2011
(51) Int. Cl.: F21S 8/12, F21V 5/00, F21V 14/06, F21V 29/00, F21W 101/02

(54) **Scheinwerfer für ein Kraftfahrzeug und Kraftfahrzeug**
Headlamp for motor vehicle and motor vehicle
Phare pour un véhicule automobile et véhicule automobile

(30) Priorität: 27.09.2010 DE 102010046571
(43) Veröffentlichungstag der Anmeldung: 28.03.2012
(73) Patentinhaber: Audi AG, 85045 Ingolstadt (DE); Volkswagen Aktiengesellschaft, 38440 Wolfsburg (DE)
(72) Erfinder: Huhn, Wolfgang, Dr., 85084 Reichertshofen (DE); Sola Gomfaus, Andreu, 38446 Wolfsburg (DE); Müller, Michael, 38518 Gifhorn (DE)
(74) Vertreter: Thielmann, Frank

(56) Entgegenhaltungen:
- EP-A1- 2 202 459
- WO-A1-2010/076741
- DE-A1-102005 014 754
- DE-A1-102005 036 018
- DE-A1-102007 006 258
- DE-A1-102007 053 399
- DE-A1-102009 006 092
- FR-A1- 2 889 869

## Beschreibung

Die Erfindung betrifft einen Scheinwerfer für ein Kraftfahrzeug, umfassend eine Lichtquellenanordnung mit mehreren Lichtquellen, insbesondere LEDs. Daneben betrifft die Erfindung ein Kraftfahrzeug mit einem solchen Scheinwerfer.

Scheinwerfer für Kraftfahrzeuge sind grundsätzlich bekannt und werden ständig weiterentwickelt, insbesondere im Hinblick darauf, auf möglichst einfache Art und Weise mehrere verschiedene Lichtverteilungen, beispielsweise eine Abblendlichtverteilung, eine Fernlichtverteilung und dergleichen, zu realisieren. Insbesondere im Bereich der LED-Technik (LED = light emitting diode) liegt ein hauptsächliches Forschungsgebiet moderner Scheinwerfertechnologie.

Dabei ist es heutzutage bekannt, bei mit solchen Einzellichtquellen, wie beispielsweise LEDs, arbeitenden Scheinwerfern separate Lichtarten beziehungsweise Lichtverteilungen für Abblendlicht, Fernlicht, Tagfahrlicht und Positionslicht vorzusehen, die jeweils mit spezifisch für diese Lichtverteilung vorgesehenen Lichtquellengruppen erzeugt werden. Hierzu ist es üblich, optische Elemente vorzusehen, die neben der spezifischen Lichtquellengruppe spezifische Reflektoren, Linsen und Kühlkörper umfassen. Es ist bekannt, diese optischen Elemente flächig nebeneinander zu platzieren.

Dies bringt eine Vielzahl von Nachteilen mit sich, beispielsweise, dass ein sehr hoher Raumbedarf erforderlich ist und Kühlkörper für sämtliche optischen Elemente benötigt werden. Letztlich muss mit den notwendigen Kosten für jede gewünschte Lichtverteilung eine komplett eigene Optik mit eigenen Lichtquellen und eigener Kühlung realisiert werden. Aus DE 10 2007 053 399 A1 ist ein gattungsgemäßer Scheinwerfer für ein Kraftfahrzeug bekannt.

Der Erfindung liegt daher die Aufgabe zugrunde, einen Scheinwerfer für ein Kraftfahrzeug anzugeben, bei dem mehrere Lichtverteilungen bei kompakterer und insbesondere auch weniger kühlaufwendiger Bauweise realisierbar sind.

Zur Lösung dieser Aufgabe ist bei einem Scheinwerfer der eingangs genannten Art erfindungsgemäß vorgesehen, dass wenigstens einem Teil der Lichtquellenanordnung ein Linsenelement nachgeschaltet ist, wobei die Lichtquellenanordnung und das Linsenelement zur Erzeugung von wenigstens zwei vorbestimmten Lichtverteilungen relativ zueinander bewegbar sind, wobei das beweglich gelagerte Linsenelement gegen die Lichtquellenanordnung rotierbar ist, wobei eine als Positionslicht dienende Mittenlichtquelle oder Mittenlichtquellengruppe auf der und/ oder um die Rotationsachse des Linsenelements angeordnet ist.

Erfindungsgemäß wird also vorgesehen, die Lichtquellen für wenigstens zwei, besonders bevorzugt jedoch alle, Lichtverteilungen zum Teil einer einzigen Lichtquellenanordnung zu machen, wobei zur Erzeugung der unterschiedlichen Lichtverteilungen zusätzlich ein Linsenelement nachgeschaltet wird, wobei dieses Linsenelement derart ausgebildet ist, dass durch eine relative Bewegung der Lichtquellenanordnung und des Linsenelements zueinander in bestimmten Stellungen die gewünschten Lichtverteilungen erzeugbar sind. Mithin wird also, wenn von einer Lichtverteilung auf eine andere Lichtverteilung umgeschaltet werden soll, die relative Anordnung von Lichtquellenanordnung und Linsenelement verändert. Dabei können rein grundsätzlich die Lichtquellenanordnung und/oder das Linsenelement für sich, insbesondere durch ein Antriebsmittel, bewegbar sein, jedoch wird erfindungsgemäß bevorzugt, eine ortsfest im Scheinwerfer vorgesehene Lichtquellenanordnung zu verwenden, wobei das Linsenelement bewegbar ist.

Mit der Zusammenfassung der Lichtquellen für sämtliche Lichtverteilungen zu einer Lichtquellenanordnung ergibt sich eine äußerst kompakte und platzsparende Bauweise. Zudem können mehrere Lichtquellengruppen oder einzelne Lichtquellen für verschiedene Lichtverteilungen/Lichtarten auf einem gemeinsamen Kühlkörper verwendet werden.

Es kann also vorgesehen sein, dass der Lichtquellenanordnung eine Kühleinrichtung, insbesondere ein Kühlkörper, zugeordnet ist. Ein solcher Kühlkörper kann sehr klein dimensio
niert werden, da nie alle Lichtverteilungen gleichzeitig verwendet werden, mithin niemals alle Lichtquellen gleichzeitig aktiv sind.

Ein weiterer Vorteil des erfindungsgemäßen Scheinwerfers ist es, dass vorgesehen sein kann, dass wenigstens eine Lichtquelle und/oder wenigstens eine Lichtquellengruppe zur Erzeugung verschiedener Lichtverteilungen nutzbar ist, das bedeutet, teure Lichtquellen, insbesondere teure LEDs, können für verschiedene Lichtverteilungen eingesetzt werden. Dies kommt zum Vorteil der Mehrfachnutzung teurer Kühlkörper für mehrere Lichtquellen beziehungsweise Lichtquellengruppen hinzu.

Besonders vorteilhaft ist es auch, dass das Linsenelement, welches also grundsätzlich eine strahlformende Wirkung hat, für mehrere Lichtverteilungen eingesetzt werden kann, das bedeutet, auch eine hochwertige optische Linse kann mehrfach genutzt werden.

Dies alles wird durch das erfindungsgemäße Vorsehen der relativen Bewegbarkeit und der Lichtquellen für mehrere Lichtverteilungen auf einer Lichtquellenanordnung erreicht.

Zur konkreten Ausgestaltung der Bewegbarkeit ist vorgesehen, dass das beweglich gelagerte Linsenelement, insbesondere durch ein Antriebsmittel, gegen die Lichtquellenanordnung rotierbar ist. Weiterhin kann das beweglich gelagerte Linsenelement auch, insbesondere senkrecht zur einer Ausstrahlrichtung, verschiebbar sein. Während also eine Ausgestaltung denkbar ist, in der das Linsenelement durch eine Translationsbewegung verschoben werden kann, beispielsweise über eine andere Gruppe von Lichtquellen, insbesondere in einer Ebene senkrecht zur Ausstrahlrichtung, wofür neben dem Antriebsmittel auch Führungsmittel vorgesehen werden können, wird erfindungsgemäß das Linsenelement über das Antriebsmittel rotierbar ausgestaltet, insbesondere um eine Achse, die im Wesentlichen parallel zur Ausstrahlungsrichtung und/oder zur Fahrzeuglängsachse liegt. Dann existieren folglich verschiedene Drehstellungen des Linsenelements, die verschiedenen Lichtverteilungen zugeordnet sind.

Als Antriebsmittel kann zweckmäßigerweise ein Schrittmotor oder ein bürstenloser Gleichstrommotor vorgesehen sein. Mit besonderem Vorteil wird dies mit einer Mechanik kombiniert, die die verschiedenen vorbestimmten Stellungen, die einer oder mehreren Lichtverteilungen zugeordnet sind, definiert, so dass durch Betrieb des Antriebsmittels das Linsenelement besonders einfach in eine andere, einer Lichtverteilung zugeordnete Stellung überführt werden kann. Beispielsweise sind hier Rastmittel oder auch Führungen mit Potentialminima denkbar. Das Antriebsmittel wird dabei beispielsweise von einem für die Scheinwerfer zuständigen Steuergerät angesteuert, wie es in Kraftfahrzeugen heutzutage bereits bekannt ist.

Wie bereits erwähnt, kann vorgesehen sein, dass einer vorbestimmten Lichtverteilung eine bestimmte relative Stellung des Linsenelements zu der Lichtquellenanordnung zugeordnet ist. Denkbar ist es beispielsweise, dass ein rotierbares Linsenelement in 15°-Schritten und/oder 90°-Schritten verstellbar ist, um die verschiedenen Stellungen zu erreichen. Beispiele für solche Verstellungen und entsprechende Lichtquellenanordnungen werden im Folgenden noch näher dargelegt.

In vorteilhafter weiterer Ausgestaltung der vorliegenden Erfindung kann vorgesehen sein, dass eine Lichtquelle und/oder eine Gruppe von Lichtquellen und/oder alle Lichtquellen bezüglich ihres Betriebs und/oder der von ihnen ausgesandten Lichtmenge, insbesondere durch Pulsweitenmodulation, ansteuerbar sind. In einer solchen Ausgestaltung ergibt sich die Lichtverteilung nicht allein aus der relativen Stellung zwischen Linsenelement und Lichtquellenanordnung, sondern auch der Betrieb der Lichtquellen kann einen Einfluss haben. Auch der Betrieb der Lichtquellen kann selbstverständlich über ein in einem den Scheinwerfer tragenden Kraftfahrzeug realisierten Steuergerät gesteuert werden. Mithin ist es beispielsweise denkbar, verschiedene Lichtquellengruppen beziehungsweise Lichtquellen zu definieren, die unabhängig betreibbar, also zur Lichtaussendung ansteuerbar, sind. Auf diese Weise lassen sich unterschiedliche Lichtverteilungen in einer relativen Stellung von Linsenelement und Lichtquellenanordnung realisieren, so dass beispielsweise durch das Zuschalten weiterer Lichtquellen und/oder Lichtquellengruppen zu einem Abblendlicht ein Fernlicht hinzugeschaltet werden kann. Doch auch über die ausgesandte Lichtmenge ergibt sich eine größere Flexibilität bezüglich der Lichtverteilung, so dass beispielsweise normalerweise einem Tagfahrlicht zugeordnete Lichtquellen und/oder Lichtquellengruppen, wenn sie zur Aussendung einer höheren Lichtmenge angesteuert werden, auch für eine Lichthupenfunktion und/oder ein Fernlicht eingesetzt werden können. Hierzu kann die Spannungsbeaufschlagung der Lichtquellen, insbesondere der LEDs, beispielsweise über ein veränderliches Tastverhältnis im Rahmen einer Pulsweitenmodulation eingestellt werden.

Durch eine Kombination der beispielsweise über ein Steuergerät einstellbaren Parameter der relativen Stellung von Linsenelement und Lichtquellenanordnung, des Betriebs der Lichtquellen und/oder Lichtquellengruppen und der durch betriebene Lichtquellen und/oder Lichtquellengruppen ausgesandten Lichtmenge lassen sich also in einer einfachen Realisierung verschiedene Lichtverteilungen unter Mehrfachnutzung des Linsenelements und der Lichtquellen erzielen.

Es sei im Übrigen angemerkt, dass vorgesehen sein kann, dass wenigstens eine Lichtquelle derart angeordnet ist, dass sie nur in wenigstens einer Stellung des Linsenelements zu der Lichtquellenanordnung von dem Linsenelement überdeckt wird. Es ist also durchaus möglich, das Linsenelement so auszugestalten, dass es nicht alle Lichtquellen der Lichtquellenanordnung gleichzeitig überdeckt, sondern dass manche Lichtquellen unüberdeckt bleiben. Dies schließt eine Nutzung dieser Lichtquellen nicht aus, so ihr Licht beispielsweise durch weitere optische Maßnahmen so gelenkt wird, dass es dennoch zu einer Lichtverteilung sinnvoll beitragen kann.

Es sei an dieser Stelle noch angemerkt, dass das Linsenelement wie grundsätzlich bekannt beispielsweise aus Glas und/oder Kunststoff realisiert werden kann. Kunststoff bietet sich insbesondere dann an, wenn eine komplexere strahlformende Wirkung des Linsenelements angestrebt wird, so dass auch eine komplexere äußere Form gegeben ist, die beispielsweise durch Spritzguss oder dergleichen erzielt werden kann. Die konkrete Form und Ausgestaltung des Linsenelements ergibt sich letztlich aus der Art der zu erzeugenden Lichtverteilungen und der vorgesehenen Anordnung der Lichtquellen der Lichtquellenanordnung.

Weiterhin ist anzumerken, dass selbstverständlich, wie es in Scheinwerfern grundsätzlich bekannt ist, jeder Lichtquelle und/oder wenigstens einer Gruppe von Lichtquellen ein Reflektor zugeordnet sein kann.

Erfindungsgemäß wird vorgesehen, dass bei einem rotierbaren Linsenelement eine als Positionslicht dienende Mittenlichtquelle oder Mittenlichtquellengruppe auf der und/oder um die Rotationsachse des Linsenelements angeordnet ist. Die Mittenlichtquelle oder Mittenlichtquellengruppe befindet sich mithin in einer Position, in der sie zum einen zur Realisierung einer Lichtverteilung, die einem Positionslicht entspricht, genutzt werden kann, wobei dies im Wesentlichen unabhängig von der konkreten Stellung des Linsenelements vorgesehen sein kann. Andererseits ist die Mittenlichtquelle oder Mittenlichtquellengruppe letztlich so positioniert, dass sie letztlich für jede Lichtverteilung mitgenutzt werden kann. Abhängig von der Stellung oder der gewünschten Lichtverteilung können dann beispielsweise weitere Lichtquellen oder Lichtquellengruppen zugeschaltet werden.

So kann beispielsweise vorgesehen sein, dass die Lichtquellenanordnung ferner zwei im Wesentlichen horizontal ausgerichtete, an die Mittenlichtquelle oder Mittenlichtquellengruppe angrenzende Horizontallichtquellen oder Horizontallichtquellengruppen umfasst. Solche, insbesondere längliche, links und rechts der Mittenlichtquelle beziehungsweise Mittenlichtquellengruppe angeordnete Horizontallichtquellen oder Horizontallichtquellengruppen können beispielsweise genutzt werden, ein Tagfahrlicht zu erzeugen. Für solch ein Tagfahrlicht können also beispielsweise die Mittenlichtquelle/Mittenlichtquellengruppe und die Horizontallichtquellen/Horizontallichtquellengruppen gleichzeitig betrieben werden, während das Linsenelement sie überdeckt.

In dieser Ausgestaltung kann ferner vorgesehen sein, dass die Lichtquellenanordnung zwei in einem vorbestimmten Winkel, insbesondere 75°, zu den Horizontallichtquellen oder Horizontallichtquellengruppen angeordnete Abblendlichtquellen oder Abblendlichtquellengruppen umfasst. Im Wesentlichen senkrecht zu den Horizontallichtquellen, wobei diese "Vertikalausrichtung" im weiteren Sinne zu verstehen ist, insbesondere im Hinblick auf Winkel über 45° zu den Horizontallichtquellen oder Horizontallichtquellengruppen, sind also, insbesondere ebenso längliche und entlang einer Richtung angeordnete Abblendlichtquellen oder Abblendlichtquellengruppen vorgesehen, die ihrem Namen entsprechend ein Abblendlicht als Lichtvereilung erzeugen können, wenn sich das Linsenelement in der korrekten relativen Position, insbesondere die Abblendlichtquellen überdeckend, befindet. Zweckmäßigerweise ist dann die Richtung, entlang derer die Abblendlichtquellen angeordnet sind, um einen gewissen Winkel, beispielsweise 15°, aus der Vertikalen geneigt, um die für das Abblendlicht typische asymmetrische Lichtverteilung zu erzeugen, wobei die Richtung der Abweichung von der Vertikalen letztlich davon bestimmt wird, ob Rechtsverkehr oder Linksverkehr vorliegt. Soll eine Abblendlichtverteilung erzeugt werden, können beispielsweise die Abblendlichtquellen oder Abblendlichtquellengruppen gemeinsam mit der Mittenlichtquelle oder Mittenlichtquellengruppe bei einer entsprechenden Stellung des Linsenelements betrieben werden.

Der Scheinwerfer kann im Übrigen auch so ausgestaltet werden, dass sowohl eine Abblendlichtverteilung bei Linksfahrgebot und eine Abblendlichtverteilung bei Rechtsfahrgebot realisiert werden können, indem diesen beiden Lichtverteilungen jeweils zwei Abblendlichtquellen oder Abblendlichtquellengruppen sowie eine entsprechende Stellung des Linsenelements zugeordnet sind. Beispielsweise kann vorgesehen sein, dass die Abblendlichtquellen oder Abblendlichtquellengruppen der beiden Abblendlichtverteilungen sich jeweils spiegelsymmetrisch bezüglich der Vertikalrichtung gegenüberliegen.

In weiterer Ausgestaltung des konkreten Ausführungsbeispiels kann vorgesehen sein, dass das länglich ausgeführte Linsenelement von einer die Horizontallichtquellen oder Horizontallichtquellengruppen vollständig überdeckenden Stellung in eine die Abblendlichtquellen oder Abblendlichtquellengruppen vollständig überdeckende Stellung schwenkbar ist. Es sind dabei letztlich verschiedene unterschiedliche Lichtverteilungen insgesamt möglich, die im Folgenden näher erläutert werden sollen. Zunächst ist ein Positionslicht denkbar, welches von der konkreten Stellung des Linsenelements unabhängig ist und allein den Betrieb der Mittenlichtquelle beziehungsweise Mittenlichtquellengruppe bedingt. Zudem ist eine Tagfahrlichtverteilung (day time running light) denkbar, bei der das längliche Linsenelement in der horizontalen Stellung angeordnet ist, folglich die Horizontallichtquellen und Horizontallichtquellengruppen gemeinsam mit der Mittenlichtquelle beziehungsweise der Mittenlichtquellengruppe überdeckt. Sowohl die Horizontallichtquellen oder Horizontallichtquellengruppen als auch die Mittenlichtquelle beziehungsweise Mittenlichtquellengruppe werden betrieben, allerdings nicht in voller Stärke, was beispielsweise über ein Tastverhältnis eingestellt werden kann. Soll nun auf Abblendlichtverteilung umgeschaltet werden, so kann die Mittenlichtquelle oder Mittenlichtquellengruppe aktiviert bleiben und das Linsenelement wird in eine Stellung gedreht, in der seine Längsrichtung der Richtung entspricht, in der die Abblendlichtquellen beziehungsweise Abblendlichtquellengruppen angeordnet sind. Diese werden dann zugeschaltet, um mittels des Linsenelements die Abblendlichtverteilung zu erzeugen. Soll schließlich eine Fernlichtverteilung hinzugefügt werden, so ist es möglich, die Horizontallichtquellen oder Horizontallichtquellengruppen zusätzlich mit größerer emittierter Lichtmenge zuzuschalten, wobei die übrige Optik des Scheinwerfers so ausgelegt werden kann, dass die Horizontallichtquellen oder Horizontallichtquellengruppen, trotzdem sie nicht vom Linsenelement überdeckt sind, den korrekten Beitrag liefern.

Es sei an dieser Stelle noch angemerkt, dass trotz des hier dargestellten speziellen Ausführungsbeispiels selbstverständlich noch eine Vielzahl anderer Möglichkeiten existiert, die vorliegende Erfindung zu realisieren. Rein beispielhaft wird darauf hingewiesen, dass es nicht nötig ist, die für das Tagfahrlicht vorgesehenen Lichtquellen als Horizontallichtquellen beziehungsweise Horizontallichtquellengruppen zu realisieren, sondern dass es auch denkbar ist, diese als Vertikallichtquellen oder Vertikallichtquellengruppen zu realisieren, während dann die im Wesentlichen horizontale Richtung den Abblendlichtquellen oder Abblendlichtquellengruppen vorbehalten wird oder dergleichen.

Ganz allgemein kann im Übrigen bei der vorliegenden Erfindung auch vorgesehen sein, insbesondere dann, wenn auch Kurvenlichtverteilung realisiert werden soll, dass wenigstens eine einer Kurvenlichtfunktion zugeordnete Kurvenlichtquelle oder Kurvenlichtquellengruppe vorgesehen ist. Eine solche Kurvenlichtquelle oder Kurvenlichtquellengruppe kann beispielsweise dann zugeschaltet werden, wenn eine Kurve im Rahmen eines Kurvenlichts verbessert ausgeleuchtet werden soll oder dergleichen und kann ebenso einen Teil der Lichtquellenanordnung bilden.

Es ist im Rahmen der vorliegenden Erfindung grundsätzlich möglich, die Lichtquellenanordnung flächig zu realisieren, das bedeutet, sämtliche Lichtquellen der Lichtquellenanordnung, beispielsweise also die Lichtquellen der Mittenlichtquellengruppe oder Mittenlichtquelle, der Horizontallichtquellen oder Horizontallichtquellengruppen, der Abblendlichtquellen oder Abblendlichtquellengruppen, der Kurvenlichtquellen oder Kurvenlichtquellengruppen, sind in einer Ebene angeordnet. Möglich ist es jedoch auch, dass die Lichtquellenanordnung in wenigstens zwei Ebenen realisiert ist. So kann beispielsweise vorgesehen sein, dass die als Teil der Lichtquellenanordnung vorgesehenen Abblendlichtquellen oder Abblendlichtquellengruppen gegenüber den Horizontallichtqüellen oder Horizontallichtquellengruppen etwas zurückgesetzt positioniert sind. Dies kann aus designtechnischen Gründen sinnvoll sein, um hier eine höhere Gestaltungsfreiheit zu erreichen.

Neben dem Scheinwerfer betrifft die vorliegende Erfindung auch ein Kraftfahrzeug mit wenigstens einem erfindungsgemäßen Scheinwerfer. Insbesondere können an einem Kraftfahrzeug zwei erfindungsgemäße Scheinwerfer vorgesehen werden. Üblicherweise kann ein solches Kraftfahrzeug dann auch ein Scheinwerfersteuergerät umfassen, welches die Scheinwerfer zur Erzeugung der verschiedenen möglichen Lichtverteilungen ansteuern kann, insbesondere ein Antriebsmittel zur Verstellung des Linsenelements.

Sämtliche Ausführungen bezüglich des erfindungsgemäßen Scheinwerfers lassen sich analog auf das erfindungsgemäße Kraftfahrzeug übertragen, so dass auch damit die erfindungsgemäßen Vorteile erreicht werden können.

Weitere Vorteile und Einzelheiten der vorliegenden Erfindung ergeben sich aus den im Folgenden beschriebenen Ausführungsbeispielen sowie anhand der Zeichnung. Dabei zeigen:
- Fig. 1: ein erfindungsgemäßes Kraftfahrzeug,
- Fig. 2: einen Querschnitt durch einen erfindungsgemäßen Scheinwerfer,
- Fig. 3: eine mögliche Anordnung von Lichtquellen und Lichtquellengruppen in der Lichtquellenanordnung,
- Fig. 4: eine Skizze zur Stellung des Linsenelements und zum Betrieb der Lichtquellen für ein Tagfahrlicht,
- Fig. 5: eine Skizze zur Bewegung des Linsenelements beim Umschalten von Tagfahrlicht auf Abblendlicht,
- Fig. 6: eine Skizze zur Stellung des Linsenelements und zum Betrieb der Lichtquellen für eine Abblendlichtverteilung bei Rechtsverkehr,
- Fig. 7: eine Skizze zur Stellung des Linsenelements und zum Betrieb der Lichtquellen bei einer Abblendlichtverteilung bei Linksverkehr,
- Fig. 8: eine Skizze zur Stellung des Linsenelements und zum Betrieb der Lichtquellen bei einer Fernlichtverteilung, und
- Fig. 9: eine Skizze zur Stellung des Linsenelements und zum Betrieb der Lichtquellen bei einer Kurvenlichtverteilung.

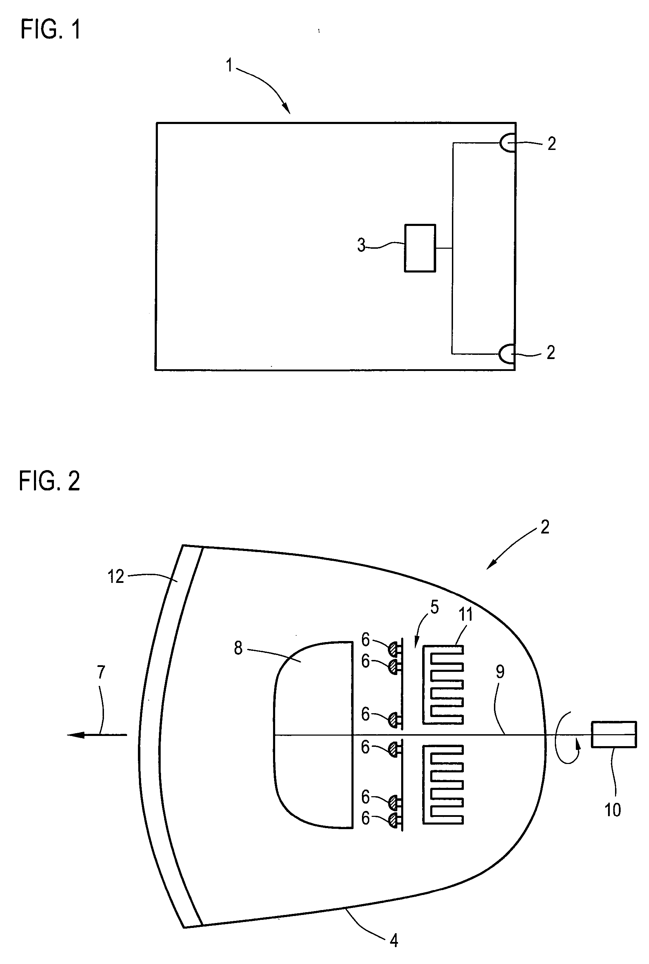

Fig. 1 zeigt eine Prinzipskizze eines erfindungsgemäßen Kraftfahrzeugs 1. Es umfasst zwei nach vorne gewandte erfindungsgemäße Scheinwerfer 2, mit denen verschiedene Lichtverteilungen erzeugt werden können, indem Lichtquellen zum Betrieb beziehungsweise bezüglich ihrer Lichtmenge angesteuert werden und ein in der relativen Position zu einer die Lichtquellen tragenden Lichtquellenanordnung veränderbares Linsenelement verwendet wird. Diese Ansteuerung der Bestromung der Lichtquellen beziehungsweise des Antriebsmittels zur Veränderung der relativen Stellung werden von einem Scheinwerfersteuergerät 3 aus gesteuert.

Fig. 2 zeigt in einem Querschnitt für die vorliegende Erfindung wichtige Komponenten des erfindungsgemäßen Scheinwerfers 2. In einem hier nur angedeuteten Gehäuse 4, das auch zumindest teilweise als Reflektor ausgebildet sein kann, ist ortsfest eine Lichtquellenanordnung 5 mit einer Mehrzahl von Lichtquellen 6, hier LEDs, vorgesehen. Diesen LEDs in Lichtaustrittsrichtung 7 nachgeschaltet ist nun ein Linsenelement 8, welches beispielsweise aus Glas oder Kunststoff hergestellt sein kann. Das Linsenelement 8 ist gegenüber der Lichtquellenanordnung 5, die im vorliegenden Fall alle verwendeten Lichtquellen enthält, um eine in Austrittsrichtung 7 liegende Rotationsachse 9 drehbar gelagert. Ein Antriebsmittel 10, welches als Schrittmotor oder bürstenloser Gleichstrommotor realisiert werden kann, wird von dem Steuergerät 3 angesteuert, um das hier länglich ausgeführte Linsenelement 8 in verschiedene, verschiedenen Lichtverteilungen zugeordnete Stellungen zu verbringen, wie im Folgenden noch näher erläutert werden wird.

Nachdem alle Lichtquellen in einer einzigen Lichtquellenanordnung 5 vorgesehen sind, ist vorliegend nur ein einziger Kühlkörper 11 zur Kühlung der Lichtquellen 6 vorgesehen, der nur aufgrund der Rotationsachse 9 eine in Fig. 2 zu sehende Durchbrechung aufweist.

Den Lichtquellen 6 können, wie grundsätzlich bekannt, auch einzeln oder gruppenweise weitere, hier nicht näher dargestellte Reflektoren zugeordnet sein, um die Lichtausbeute zu fördern und/oder vorbereitend strahlformend zu wirken. Auch im Lichtaustrittsbereich des Scheinwerfers 2 können weitere optische Mittel 12 verwendet werden, worauf später noch näher eingegangen werden wird.

Obwohl im hier dargestellten Ausführungsbeispiel die Lichtquellen 6 im wesentlichen in einer Ebene angeordnet sind, die Lichtquellenanordnung 5 also flächig ausgebildet ist, ist es selbstverständlich grundsätzlich denkbar, die Lichtquellen 6 in mehreren Ebenen hintereinander anzuordnen, um Designkriterien gerecht zu werden. Dennoch bilden die Lichtquellen 6 auch in diesem Fall Teil einer einzigen Lichtquellenanordnung 5 mit einem einzigen Kühlkörper 11.

Das Linsenelement 8 ist strahlformend und in seinem Design auf die zu realisierenden Lichtverteilungen abgestimmt, was im Folgenden noch näher erläutert werden soll.

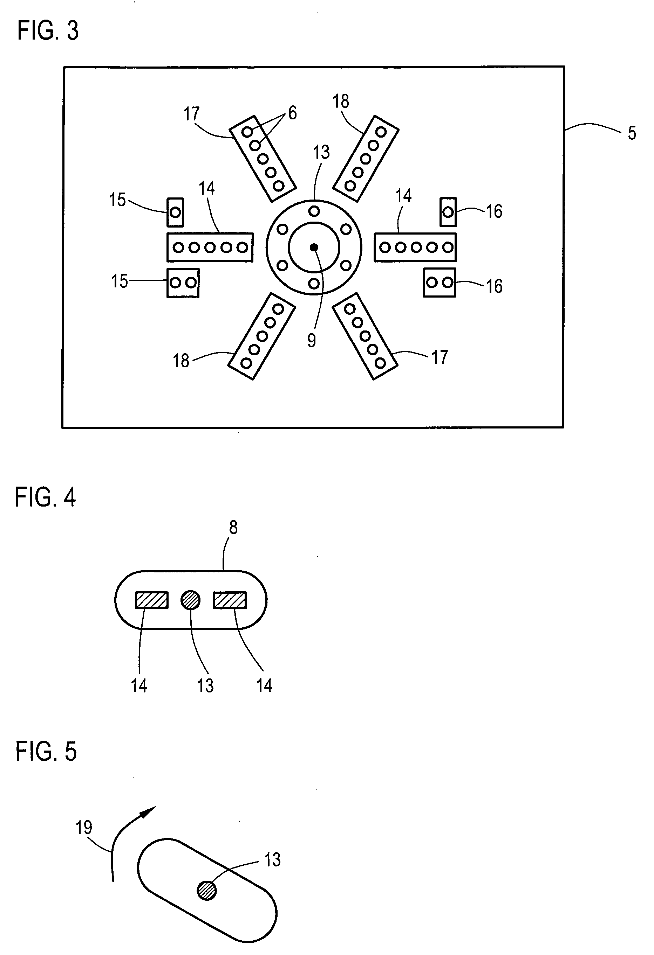

Zunächst ist allerdings festzuhalten, dass die Lichtquellen 6 des erfindungsgemäßen Scheinwerfers 2 vorliegend in verschiedenen, getrennt ansteuerbaren Gruppen angeordnet sind, was mit Hilfe der Fig. 3 näher erläutert werden soll. Diese Einordnung in Gruppen erlaubt einen gruppenweisen Betrieb der Lichtquellen 6, möglich ist es auch, die Lichtquellen 6 durch das Steuergerät 3 einzeln anzusteuern.

Wie aus Fig. 3 ersichtlich ist, die selbstverständlich nur eine Prinzipskizze darstellt, sind die um die Rotationsachse 9 angeordneten Lichtquellen 6 einer Mittenlichtquellengruppe 13 zugeordnet. In der Horizontalen schließen sich links und rechts an die Mittenlichtquellengruppe 13 jeweils eine Horizontallichtquellengruppe 14 an. Benachbart zu diesen sind linke Kurvenlichtgruppen 15 und rechte Kurvenlichtgruppen 16 vorgesehen. In aus der Vertikalen leicht geneigten Richtungen erstrecken sich Abblendlichtquellengruppen 17 für Rechtsverkehr und Abblendlichtquellengruppen 18 für Linksverkehr.

Dabei sind im vorliegenden Beispiel wenigstens die Mittenlichtquellengruppe 13 und die Horizontallichtquellengruppen 14 mittels Pulsweitenmodulation zur Ausstrahlung unterschiedlicher Lichtmengen durch das Steuergerät 3 ansteuerbar.

Durch den unterschiedlichen Betrieb dieser Lichtquellengruppen, kombiniert mit der Rotierbarkeit des Linsenelements 8, lassen sich nun verschiedene Lichtverteilungen durch diesen äußerst kompakten und durch Mehrfachnutzung verschiedener Komponenten geprägten Scheinwerfer erzielen. Dabei sind in den folgenden schematischen Figuren zur Realisierung der verschiedenen Lichtverteilungen nur jeweils betriebene Lichtquellengruppen 13 - 18 sowie die Stellung des länglich ausgeführten Linsenelements 8 eingezeichnet.

Fig. 4 zeigt eine Ansteuerung zur Erzeugung eines Tagfahrlichts. Ersichtlich befindet sich das Linsenelement 8 in einer horizontalen Stellung und überdeckt somit die aktiven Lichtquellengruppen 13 und 14. Die Lichtquellengruppen werden hierbei nicht auf voller Leistung betrieben. Das Ergebnis ist eine typische Tagfahrlichtverteilung. Es sei an dieser Stelle noch angemerkt, dass, falls nur die Mittenlichtquellengruppe 13 betrieben wird, eine einem Positionslicht entsprechende Lichtverteilung gegeben ist. Die Mittenlichtquellengruppe 13 lässt sich mithin auch als Positionslichtquellengruppe bezeichnen.

Fig. 5 zeigt einen Zwischenzustand beim Umschalten von Tagfahrlicht auf Abblendlicht. Ersichtlich wird das Linsenelement 8 gerade rotiert, Pfeil 19. Nur die Mittenlichtquellengruppe 13 ist aktiv, was im Übrigen zum Erzeugen eines interessanten, auch für einen Betrachter sichtbaren optischen Effekts genutzt werden kann, der den Produktwert steigern kann.

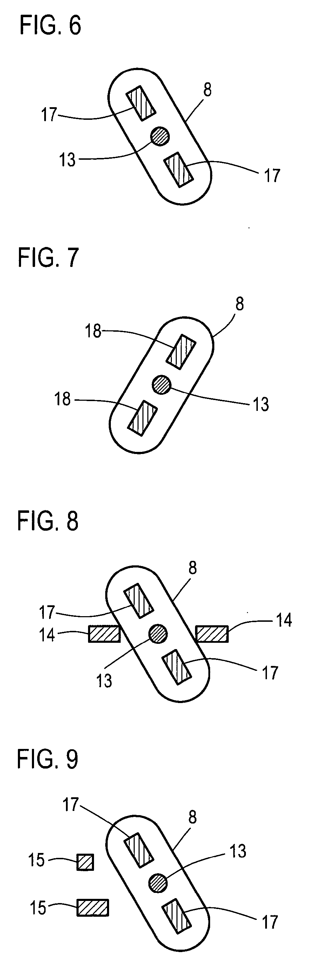

Fig. 6 zeigt einen Betriebszustand zur Erzeugung einer Abblendlichtverteilung bei Rechtsverkehr. Der Schwenkvorgang des Linsenelements 8 ist nun abgeschlossen, es überdeckt nun neben der Mittenlichtquellengruppe 13 die Abblendlichtquellengruppen 17, welche ebenso aktiv sind. So wird ein für Rechtsverkehr geeignetes Abblendlicht erzeugt.

Fig. 7 zeigt, dass bei Linksverkehr zur Erzeugung der Abblendlichtverteilung die Abblendlichtquellengruppen 18 und eine entsprechende weitere Stellung des Linsenelements 8 verwendet werden.

Fig. 8 zeigt nun, wie auf einfache Weise das Abblendlicht zu einem Fernlicht erweitert werden kann. Hierzu werden zusätzlich zu der Situation in Fig. 6 (oder Fig. 7) die Horizontallichtquellengruppen 14 unter Ausstrahlung einer hohen Lichtmenge in Betrieb genommen. Zwar strahlen die Horizontallichtquellengruppen 14 an dem Linsenelement 8 vorbei, jedoch ist die Ausgestaltung der Reflektoren und der übrigen Optik des Scheinwerfers 2 so gewählt, dass die gewünschte Fernlichtverteilung erreicht werden kann.

Auch eine Kurvenlichtverteilung kann als Erweiterung der Abblendlichtverteilung realisiert werden, wie Fig. 9 zeigt. Dort ist zu sehen, dass zusätzlich zu den Abblendlichtquellengruppen 17 und der Mittenlichtquellengruppe 13 nun noch die Kurvenlichtquellengruppen 15 aktiv sind. Selbstverständlich ist bei einer Kurvenfahrt in der anderen Richtung eine analoge Kurvenlichtverteilung unter Zuschaltung der Kurvenlichtquellengruppen 16 möglich.

Es sei an dieser Stelle noch angemerkt, dass auch Realisierungen möglich sind, in denen statt Lichtquellengruppen einzelne Lichtquellen verwendet werden. Auch ist es selbstverständlich möglich, wird ein Kraftfahrzeug beispielsweise für einen speziellen Markt hergestellt, nur die Abblendlichtquellengruppen für den Rechtsverkehr oder den Linksverkehr vorzusehen.

Schließlich sei noch darauf hingewiesen, dass in einer anderen Ausführungsform es auch denkbar ist, statt oder zusätzlich zu der Rotationsbewegung des Linsenelements eine Translationsbewegung vorzusehen, insbesondere parallel zu der Ebene beziehungsweise den Ebenen, in denen die Lichtquellen auf der Lichtquellenanordnung realisiert sind. Grundsätzlich sind selbstverständlich auch noch andere Möglichkeiten denkbar, das Linsenelement so zu bewegen, dass die verschiedenen Lichtverteilungen erreicht werden können. Ersichtlich sind ausgehend von der Grundidee der vorliegenden Erfindung, die relative Position einer insbesondere alle Lichtquellen des Scheinwerfers tragenden Lichtquellenanordnung zu einem Linsenelement zu verändern, verschiedenste Ausgestaltungen denkbar, um einen kompakten, einfach aufgebauten Scheinwerfer zu erreichen, in dem das Linsenelement, Lichtquellen und Kühlkörper mehrfach genutzt werden können.

## Patentansprüche

1. Scheinwerfer (2) für ein Kraftfahrzeug (1), umfassend eine Lichtquellenanordnung (5) mit mehreren Lichtquellen (6), insbesondere LEDs, wobei wenigstens einem Teil der Lichtquellenanordnung (5) ein Linsenelement (8) nachgeschaltet ist, wobei die Lichtquellenanordnung (5) und das Linsenelement (8) zur Erzeugung von wenigstens zwei vorbestimmten Lichtverteilungen relativ zueinander bewegbar sind,
**dadurch gekennzeichnet,**
**dass** das beweglich gelagerte Linsenelement gegen die Lichtquellenanordnung rotierbar ist, wobei eine als Positionslicht dienende Mittenlichtquelle oder Mittenlichtquellengruppe (13) auf der und/oder um die Rotationsachse (9) des Linsenselements (8) angeordnet ist.

2. Scheinwerfer nach Anspruch 1,
**dadurch gekennzeichnet, dass** der Lichtquellenanordnung (5) eine Kühleinrichtung, insbesondere ein Kühlkörper (11), zugeordnet ist.

3. Scheinwerfer nach Anspruch 1, **dadurch gekennzeichnet, dass** das bewegliche gelagerte Linsenelement (8), insbesondere durch ein Antriebsmittel (10), gegen die Lichtquellenanordnung (5), insbesondere senkrecht zu einer Ausstrahlrichtung (7), verschiebbar ist.

4. Scheinwerfer nach Anspruch 3, **dadurch gekennzeichnet, dass** das Antriebsmittel (10) ein Schrittmotor oder ein bürstenloser Gleichstrommotor ist.

5. Scheinwerfer nach einem der vorangehenden Ansprüche, **dadurch gekennzeichnet, dass** einer vorbestimmten Lichtverteilung eine bestimmte relative Stellung des Linsenelements (8) zu der Lichtquellenanordnung (5) zugeordnet ist.

6. Scheinwerfer nach einem der vorangehenden Ansprüche, **dadurch gekennzeichnet, dass** eine Lichtquelle (6) und/oder eine Gruppe (13, 14, 15, 16, 17, 18) von Lichtquellen (6) und/oder alle Lichtquellen (6) bezüglich ihres Betriebs und/oder der von ihnen ausgesandten Lichtmenge, insbesondere durch Pulsweitenmodulation, ansteuerbar sind.

7. Scheinwerfer nach einem der vorangehenden Ansprüche, **dadurch gekennzeichnet, dass** wenigstens einer, insbesondere jeder Lichtquelle (6) und/oder wenigstens einer Gruppe (13, 14, 15, 16, 17, 18) von Lichtquellen (6) ein Reflektor zugeordnet ist.

8. Scheinwerfer nach einem der vorangehenden Ansprüche, **dadurch gekennzeichnet, dass** wenigstens eine Lichtquelle (6) derart angeordnet ist, dass sie nur in wenigstens einer Stellung des Linsenselements (8) zu der Lichtquellenanordnung (5) von dem Linsenelement (8) überdeckt wird.

9. Scheinwerfer nach Anspruch 1, **dadurch gekennzeichnet, dass** die Lichtquellenanordnung (5) ferner zwei im Wesentlichen horizontal ausgerichtete, an die Mittenlichtquelle oder Mittenlichtquellengruppe (13) angrenzende Horizontallichtquellen oder Horizontallichtquellengruppen (14) umfasst.

10. Scheinwerfer nach Anspruch 9, **dadurch gekennzeichnet, dass** die Lichtquellenanordnung (5) ferner zwei in einem vorbestimmten Winkel zu den Horizontallichtquellen oder Horizontallichtquellengruppen (14) angeordnete Abblendlichtquellen oder Abblendlichtquellengruppen (17, 18) umfasst.

11. Scheinwerfer nach Anspruch 10, **dadurch gekennzeichnet, dass** für eine Lichtverteilung bei Linksfahrgebot und eine Lichtverteilung bei Rechtsfahrgebot jeweils zwei Abblendlichtquellen oder Abblendlichquellengruppen (17, 18) vorgesehen sind.

12. Scheinwerfer nach Anspruch 10 oder 11, **dadurch gekennzeichnet, dass** das länglich ausgeführte Linsenelement (8) von einer die Horizontallichtquellen oder Horizontallichtquellengruppen (14) vollständig überdeckenden Stellung in eine die Abblendlichtquellen oder Abblendlichtquellengruppen (17, 18) vollständig überdeckende Stellung schwenkbar ist.

13. Scheinwerfer nach einem der vorangehenden Ansprüche, **dadurch gekennzeichnet, dass** wenigstens eine einer Kurvenlichtfunktion zugeordnete Kurvenlichtquelle oder Kurvenlichtquellengruppe (15, 16) vorgesehen ist.

14. Kraftfahrzeug (1), umfassend wenigstens einen Scheinwerfer (2) nach einem der vorangehenden Ansprüche.

## Claims

1. Headlamp (2) for a motor vehicle (1) comprising a light source arrangement (5) with several light sources (6), more particularly LEDs, wherein at least one lens element (8) is arranged downstream of a part of the light source arrangement (5), wherein in order to generate at least two predetermined light distributions the light source arrangement (5) and the lens element (8) can be moved relative to each other,
**characterised in that**
the movably supported lens element can be rotated against the light source arrangement, wherein a central light source or central light source group (13) acting as a positioning light is arranged on and/or around the axis of rotation (9) of the lens element (8)

2. Headlamp according to claim 1 **characterised in that** a cooling device, more particularly a cooling body (11), is assigned to the light source arrangement (5).

3. Headlamp according to claim 1 **characterised in that** the movably supported lens element (8) can more particularly be displaced by an actuating means (10) against the light source arrangement (5), more particularly at right angles to a emission direction (7).

4. Headlamp according to claim 3 **characterised in that** the actuator means (10) is a stepper motor or a brushless direct current motor.

5. Headlamp according to any one of the preceding claims **characterised in that** a determined position of the lens element (8) relative to the light source arrangement (5) is associated with a pre-determined light distribution.

6. Headlamp according to any one of the preceding claims **characterised in that** in terms of their operation and/or the quantity of light emitted by them, a light source (6) and/or a group (13, 14, 15, 16, 17, 18) of light sources (6) and/or all light sources (6) can more particularly be controlled by pulse width modulation.

7. Headlamp according to any one of the preceding claims **characterised in that** a reflector is assigned to at least one, preferably every light source (6) and/or at least one group (13, 14, 15, 16, 17, 18) of light sources (6).

8. Headlamp according to any one of the preceding claims **characterised in that** at least one light source (6) is arranged in such a way that it is only covered by the lens element (8) in at least one position of the lens element (8) with regard to the light source arrangement (5).

9. Headlamp according to claim 1 **characterised in that** the light source arrangement (5) also comprises two essentially horizontally aligned horizontal light sources or horizontal light source groups adjoining the central light source or central light source group (13).

10. Headlamp according to claim 9 **characterised in that** the light source arrangement (5) also comprises two dipped beam light sources or dipped beam light source groups (17, 18) arranged at a predetermined angle with regard to the horizontal light sources or horizontal light source groups (14).

11. Headlamp according to claim 10 **characterised in that** for light distribution for driving on the left and light distribution for driving on the right, two dipped beam light sources or dipped beam light source groups (17, 18) are provided in each case.

12. Headlamp according to claim 10 or 11 **characterised in that** the elongated lens element (8) can be tilted from a position in which it completely covers the horizontal light sources or horizontal light source groups (14) into a position in which it completely covers the dipped beam light sources or dipped beam light source groups (17, 18).

13. Headlamp according to any one of the preceding claims **characterised in that** at least one curve light source or curve light source group (15, 16) associated with a curve light function is provided.

14. Motor vehicle (1) comprising at least one headlamp (2) according to any one of the preceding claims.

## Revendications

1. Phare (2) pour un véhicule automobile (1), comprenant un aménagement de sources de lumière (5) avec plusieurs sources de lumière (6), en particulier des DEL, dans lequel on connecte en aval d'au moins une partie de l'aménagement de sources de lumière (5) un élément lenticulaire (8), dans lequel l'aménagement de sources de lumière (5) et l'élément lenticulaire (8) peuvent être déplacés l'un par rapport à l'autre pour la production d'au moins deux faisceaux de lumière prédéterminés,
**caractérisé en ce que** :
l'élément lenticulaire monté mobile peut tourner par rapport à l'aménagement de sources de lumière, dans lequel une source de lumière centrale ou un groupe de sources de lumière centrales (13) servant de feu de repérage est aménagé(e) sur et/ou autour de l'axe de rotation (9) de l'élément lenticulaire (8).

2. Phare selon la revendication 1, **caractérisé en ce qu'**un dispositif de refroidissement, en particulier un radiateur (11), est affecté à l'aménagement de sources de lumière (5).

3. Phare selon la revendication 1, **caractérisé en ce que** l'élément lenticulaire monté mobile (8) peut être déplacé en particulier par un moyen d'entraînement (10) par rapport à l'aménagement de sources de lumière (5), en particulier perpendiculairement à une direction d'émission (7).

4. Phare selon la revendication 3, **caractérisé en ce que** le moyen d'entraînement (10) est un moteur pas à pas ou un moteur à courant continu sans balais.

5. Phare selon l'une quelconque des revendications précédentes, **caractérisé en ce qu'**une position relative déterminée de l'élément lenticulaire (8) est affectée à un faisceau de lumière prédéterminé par rapport à l'aménagement de sources de lumière (5).

6. Phare selon l'une quelconque des revendications précédentes, **caractérisé en ce qu'**une source de lumière (6) et/ou un groupe (13, 14, 15, 16, 17, 18) de sources de lumière (6) et/ou toutes les sources de lumière (6) peut ou peuvent être commandé(e)s quant à leur fonctionnement et/ou à la quantité de lumière émise par celle(s)-ci, en particulier par modulation d'impulsions en largeur.

7. Phare selon l'une quelconque des revendications précédentes, **caractérisé en ce qu'**un réflecteur est affecté au moins à une source de lumière, en particulier à chaque sources de lumière (6) et/ou au moins à un groupe (13, 14, 15, 16, 17, 18) de sources de lumière (6).

8. Phare selon l'une quelconque des revendications précédentes, **caractérisé en ce qu'**au moins une source de lumière (6) est aménagée de sorte qu'elle ne soit couverte par l'élément lenticulaire (8) que dans au moins une position de l'élément lenticulaire (8) par rapport à l'aménagement de sources de lumière (5).

9. Phare selon la revendication 1, **caractérisé en ce que** l'aménagement de sources de lumière (5) comprend en outre deux sources de lumière horizontales ou groupes de sources de lumière horizontales (14) orienté(e)s sensiblement horizontalement et avoisinant la source de lumière centrale ou le groupe de sources de lumière centrales (13).

10. Phare selon la revendication 9, **caractérisé en ce que** l'aménagement de sources de lumière (5) comprend en outre deux sources de lumière de croisement ou groupes de sources de lumière de croisement (17, 18) aménagé(e)s selon un angle prédéterminé avec les sources de lumière horizontales et les groupes de sources de lumière horizontales (14).

11. Phare selon la revendication 10, **caractérisé en ce que**, pour un faisceau de lumière en circulation à gauche et un faisceau de lumière en circulation à droite, il est prévu respectivement deux sources de lumière de croisement ou groupes de sources de lumière de croisement (17, 18).

12. Phare selon la revendication 10 ou la revendication 11, **caractérisé en ce que** l'élément lenticulaire de forme allongée (8) peut être soumis à un pivotement d'une position couvrant complètement les sources de lumière horizontales ou les groupes de sources de lumière horizontales (14) à une position couvrant complètement les sources de lumière de croisement ou les groupes de sources de lumière de croisement (17, 18).

13. Phare selon l'une quelconque des revendications précédentes, **caractérisé en ce qu'**il est prévu au moins une source de lumière en virage ou un groupe de sources de lumière en virage (15, 16) affectées à une fonction lumineuse de virage.

14. Véhicule automobile (1) comprenant au moins un phare (2) selon l'une quelconque des revendications précédentes.
